# EUROPÄISCHE PATENTSCHRIFT

(11) **EP 4 658 543 B1**
(45) Veröffentlichungstag und Bekanntmachung des Hinweises auf die Patenterteilung: **26.08.2026**
(21) Anmeldenummer: 23822274.9
(22) Anmeldetag: 08.12.2023
(51) Int. Cl.: B60W 60/00

(54) **VERFAHREN ZUM ANPASSEN EINES FAHRVERHALTENS EINES FAHRZEUGES**
METHOD FOR ADJUSTING A DRIVING BEHAVIOUR OF A VEHICLE
PROCÉDÉ DE RÉGLAGE D'UN COMPORTEMENT DE CONDUITE D'UN VÉHICULE

(30) Priorität: 30.01.2023 DE 102023000266
(43) Veröffentlichungstag der Anmeldung: 10.12.2025
(73) Patentinhaber: Mercedes-Benz Group AG, 70372 Stuttgart (DE)
(72) Erfinder: KOBETZ, Christian, 72160 Horb (DE); SEEKIRCHER, Jürgen, 76316 Malsch (DE)
(74) Vertreter: Novagraaf Group
(86) Internationale Anmeldenummer: PCT/EP2023/084904
(87) Internationale Veröffentlichungsnummer: WO 2024/160426

(56) Entgegenhaltungen:
- US-A1- 2017 249 839
- US-A1- 2019 283 758
- US-A1- 2020 257 299

## Beschreibung

Die Erfindung betrifft ein Verfahren zum Anpassen eines Fahrverhaltens eines im automatisierten Fahrbetrieb fahrenden Fahrzeuges bei einem erkannten, sich im Einsatz befindenden Einsatzfahrzeug in einer Umgebung des Fahrzeuges, wobei das Einsatzfahrzeug anhand seines ausgegebenen akustischen Sondersignals erkannt wird.

Aus der DE 10 2017 009 491 A1 ist ein Verfahren zur Abstandsregelung eines Fahrzeuges bekannt. Dabei werden verkehrsrelevante Informationen aus einer Umgebung des Fahrzeuges erfasst und eine momentane Fahrgeschwindigkeit des Fahrzeuges wird in Abhängigkeit eines erfassten Abstandes zu einem vorausfahrenden Fahrzeug geregelt und/oder gesteuert. Die Fahrgeschwindigkeit des Fahrzeuges wird bei Erfassung eines Einsatzes zumindest eines Einsatzfahrzeuges in einer Umgebung des Fahrzeuges anders eingestellt als bei Nichterfassung eines Einsatzes des Einsatzfahrzeuges.

Darüber hinaus beschreibt die DE 10 2018 218 973 A1 ein Verfahren zum Anpassen eines autonomen Fahrzeuges, ein autonomes Fahrzeug, ein Sondereinsatzfahrzeug und ein System. Das Verfahren umfasst die Schritte Ermitteln eines einsatzspezifischen Merkmals eines Sondereinsatzfahrzeuges und/oder drahtloses Empfangen einer von dem Sondereinsatzfahrzeug abgesandten einsatzspezifischen Information durch das autonome Fahrzeug und Analysieren einer das autonome Fahrzeug und das Sondereinsatzfahrzeug betreffenden Umgebungssituation basierend auf dem ermittelten spezifischen Merkmal und/oder der empfangenen abgesandten einsatzspezifischen Information durch das autonome Fahrzeug.

Aus der DE 10 2013 2020 307 A1 ist ein Verfahren zur Unterstützung eines Fahrers eines Fahrzeugs bei der Bildung einer Rettungsgasse bekannt. Dabei ist vorgesehen, dass während des Bildens der Rettungsgasse eine Ausnahmesituation bezüglich eines in einer entgegengesetzten Fahrtrichtung fahrenden Einsatzfahrzeugs erkannt wird und eine Steuerung des Fahrzeugs entsprechend angepasst wird.

Gemäß der US 2019 / 283758 A1 wird eine Fahrzeugsteuervorrichtung bereitgestellt, die eine Erkennungseinheit zur Erkennung der Umgebungssituation eines Fahrzeugs und eine Fahrsteuereinheit zur automatischen Steuerung von Beschleunigung/Verzögerung und Lenkung des Fahrzeugs auf Grundlage der von der Erkennungseinheit erkannten Umgebungssituation umfasst. Die Erkennungseinheit erkennt ein Geräusch eines bestimmten Fahrzeugs in der Nähe des Fahrzeugs. Erfüllt eine Merkmalsgröße des von der Erkennungseinheit erkannten Geräuschs ein Kriterium, führt die Fahrsteuereinheit einen Ausweichvorgang durch, der das Fahrzeug veranlasst, dem bestimmten Fahrzeug auszuweichen, um dessen Fahrt nicht zu blockieren.

Aus der US 2020 / 257299 A1 ist ein autonom fahrendes Fahrzeug bekannt, das automatisch auf ein Einsatzfahrzeug reagiert. Kameras, Sensoren und Mikrofone des autonomen Fahrzeugs erfassen und empfangen die Wahrnehmungsdaten. Die Daten werden verwendet, um Fahrspuren zu erkennen, eine Objektliste zu erstellen, ein oder mehrere Objekte zu klassifizieren und den Zustand der klassifizierten Objekte zu bestimmen. Als Reaktion auf die Erkennung eines Einsatzfahrzeugs, beispielsweise eines Polizeifahrzeugs, kann das autonome Fahrzeug eine Reaktion planen.

Die US 2017 / 249839 A1 betrifft ein Verfahren zur sicheren und automatischen Navigation in Gegenwart von Einsatzfahrzeugen. Ein erstes Fahrzeug kann über Kommunikationshardware eine Nachricht empfangen, die die Anwesenheit des Einsatzfahrzeugs anzeigt. Diese Nachricht kann vom Einsatzfahrzeug selbst und/oder von einer Infrastruktur wie einer intelligenten Ampel stammen, die die Anwesenheit des Einsatzfahrzeugs erkennen kann. Das erste Fahrzeug kann dann den relativen Standort des Einsatzfahrzeugs bestimmen und automatisch entsprechend reagieren, indem es eine sichere Trajektorie bestimmt und entsprechend navigiert, bis das Einsatzfahrzeug außer Reichweite ist.

Der Erfindung liegt die Aufgabe zugrunde, ein Verfahren zum Betrieb eines Fahrzeuges bei einem erkannten, sich im Einsatz befindenden Einsatzfahrzeug in einer Umgebung des Fahrzeuges anzugeben.

Die Aufgabe wird erfindungsgemäß gelöst durch ein Verfahren, welches die in Anspruch 1 angegebenen Merkmale aufweist.

Vorteilhafte Ausgestaltungen der Erfindung sind Gegenstand der Unteransprüche.

Ein Verfahren zum Anpassen eines Fahrverhaltens eines im automatisierten Fahrbetrieb fahrenden Fahrzeuges bei einem erkannten, sich im Einsatz befindenden Einsatzfahrzeug in einer Umgebung des Fahrzeuges, wobei das Einsatzfahrzeug anhand seines ausgegebenen akustischen Sondersignals erkannt wird, sieht erfindungsgemäß vor, dass das Fahrzeug bei Erkennen des Einsatzfahrzeuges in einen Stillstand gebremst wird, wobei anhand einer Auswertung des akustischen Sondersignals des Einsatzfahrzeuges ermittelt wird, ob sich das Einsatzfahrzeug ebenfalls im Stillstand befindet, und in Abhängigkeit davon, ob sich das Einsatzfahrzeug im Stillstand befindet, das Fahrzeug von einer momentanen Stillstandposition nach vorn in eine weitere Stillstandposition bewegt wird.

Insbesondere handelt es sich bei dem Einsatzfahrzeug um eines der Polizei, der Feuerwehr oder eines Rettungsdienstes.

Durch Anwendung des Verfahrens kann weitestgehend vermieden werden, dass das automatisiert fahrende Fahrzeug wegen des Einsatzfahrzeuges in den Stillstand überführt wird und in diesem verbleibt, insbesondere solange das Einsatzfahrzeug das akustische Sondersignal ausgibt. Somit kann gegebenenfalls eine Blockierung eines Verkehrsflusses wegen des in den Stillstand überführten Fahrzeuges ausgeschlossen werden, da das fahrzeugseitig empfangene, von dem Einsatzfahrzeug ausgegebene akustische Sondersignal ausgewertet wird und somit ermittelt werden kann, ob sich das Einsatzfahrzeug ebenfalls im Stillstand befindet, seinen Fahrbetrieb fortführt oder erneut aufnimmt.

Das Fahrzeug ermittelt dann an der weiteren Stillstandposition erneut, ob sich das im Einsatz befindende Einsatzfahrzeug im Stillstand befindet, um in eine sichere Stillstandposition, beispielsweise auf einem Parkplatz oder in einer Haltebucht, überführt zu werden.

In einer Ausführung wird, wenn sich das Einsatzfahrzeug im Stillstand befindet, ein Zuverlässigkeitsmaß für eine Zuverlässigkeit, mit welcher der Stillstand des Einsatzfahrzeuges erkannt wurde, ermittelt. Das heißt, dass ein Erkennen des Stillstandes des Einsatzfahrzeuges vergleichsweise gut bis weniger gut erfolgt und dementsprechend das Fahrverhalten des Fahrzeuges angepasst wird, ohne dass das Fahrzeug andere Verkehrsteilnehmer, insbesondere Fahrzeuge, blockiert.

Eine weitere Ausführung des Verfahrens sieht vor, dass in Abhängigkeit des ermittelten Zuverlässigkeitsmaßes eine Entfernung zwischen dem Fahrzeug und dem Einsatzfahrzeug bestimmt wird und das Fahrzeug um die bestimmte Entfernung von seiner momentanen Stillstandposition nach vorn in eine weitere Stillstandposition bewegt wird. Das Fahrzeug nähert sich also dem Einsatzfahrzeug an, um erneut anhand des erfassten akustischen Sondersignals zu ermitteln, ob sich das Einsatzfahrzeug im Stillstand oder im Fahrbetrieb befindet. In Abhängigkeit von einem Status des Einsatzfahrzeuges wird ermittelt, ob das Fahrzeug in einen sicheren Stillstand, das heißt an einer für einen Stillstand geeigneten Position, überführt oder ein automatisierter Fahrbetrieb wieder aufgenommen werden kann.

In einer Weiterbildung wird an der weiteren Stillstandposition des Fahrzeuges erneut ermittelt, ob sich das Einsatzfahrzeug im Stillstand befindet und ein Zuverlässigkeitsmaß für die Zuverlässigkeit, mit welcher der Stillstand des Einsatzfahrzeuges erkannt wurde, wird ermittelt, wobei dieser Vorgang so oft wiederholt wird, bis das Fahrzeug eine sichere Stillstandposition erreicht hat. Somit erfolgt eine mehrstufige Stillstanderkennung in Bezug auf das Einsatzfahrzeug, wobei mittels dieser mehrstufigen Stillstanderkennung signalisiert wird, ob eine Weiterfahrt des Fahrzeuges möglich ist.

Darüber hinaus sieht eine mögliche Weiterbildung des Verfahrens vor, dass das Fahrzeug von der jeweiligen Stillstandposition bis zum Erreichen der sicheren Stillstandposition mit einer Fahrgeschwindigkeit fährt, welche einen vorgegebenen Schwellwert unterschreitet. Dabei kann der Schwellwert beispielsweise 10 km/h betragen, so dass sich das Fahrzeug dem Einsatzfahrzeug vergleichsweise langsam nähert, um erneut die Stillstanderkennung durchzuführen, so dass ermittelt werden kann, ob das Fahrzeug in eine sichere Stillstandposition überführt werden muss oder seinen automatisierten Fahrbetrieb erneut aufnehmen kann.

In einer weiteren möglichen Ausführung wird ermittelt, ob sich das Einsatzfahrzeug im Stillstand befindet, wenn ermittelt wird, dass sich das Einsatzfahrzeug vor dem Fahrzeug befindet. Wird beispielsweise ermittelt, dass sich das Einsatzfahrzeug auf einer Gegenfahrbahn befindet, ist es in den meisten Fällen nicht erforderlich, dass das Fahrzeug in den Stillstand überführt wird, da sich das Fahrzeug üblicherweise nicht im Fahrweg des Einsatzfahrzeuges befindet.

Weiterhin sieht eine Ausführung des Verfahrens vor, dass der automatisierte Fahrbetrieb des Fahrzeuges erneut aufgenommen wird, wenn das mittels des Einsatzfahrzeuges ausgegebene akustische Sondersignal von einer Sensoranordnung des Fahrzeuges nicht mehr erfasst wird. Das Einsatzfahrzeug hat dann entweder seinen Fahrbetrieb wieder aufgenommen und fährt zu einem anderen Zielort, insbesondere Einsatzort, als das Fahrzeug oder der Einsatz des Einsatzfahrzeuges ist beendet.

In einer weiteren Ausführung wird das Fahrzeug im automatisierten Fahrbetrieb fahrerlos betrieben, so dass sich kein Fahrzeugnutzer in dem Fahrzeug befindet, welcher die Fahraufgabe in Bezug auf das Fahrzeug übernehmen kann, beziehungsweise eine vorliegende Verkehrssituation mit dem Einsatzfahrzeug einschätzen kann, um dann entsprechend angemessen zu handeln.

Ferner sieht eine Ausführung des Verfahrens vor, dass das von dem Einsatzfahrzeug ausgegebene akustische Sondersignal mittels einer am Fahrzeug angeordneten Anzahl von Mikrofonen als Sensoranordnung erfasst wird. Insbesondere kann anhand des erfassten akustischen Sondersignals des Einsatzfahrzeuges eine Richtung und eine Entfernung des Einsatzfahrzeuges relativ zu dem Fahrzeug ermittelt werden. Somit ist es möglich, vergleichsweise einfach zu ermitteln, ob sich das Einsatzfahrzeug bewegt oder steht.

Ausführungsbeispiele der Erfindung werden im Folgenden anhand einer Zeichnung näher erläutert.

Dabei zeigt die:

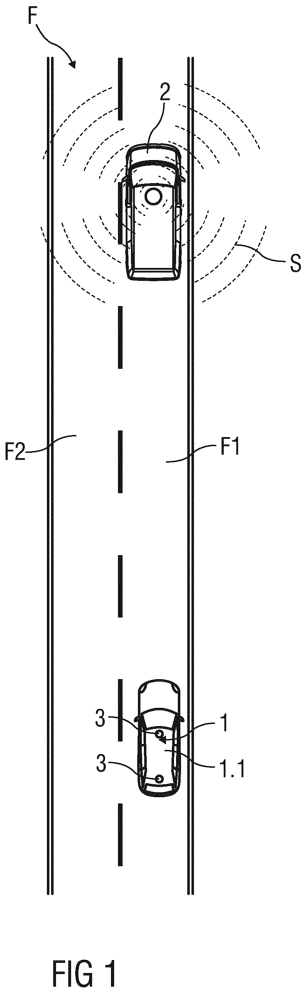

- Fig. 1: schematisch einen Fahrbahnabschnitt mit einem Fahrzeug und ein sich vor diesem befindliches Einsatzfahrzeug im Einsatz.

Die einzige Figur zeigt einen Fahrbahnabschnitt F mit zwei Fahrspuren F1, F2, wobei sich auf einer rechten Fahrspur F1 ein Fahrzeug 1 und vor diesem ein sich im Einsatz befindendes Einsatzfahrzeug 2, beispielsweise die Polizei, die Feuerwehr oder ein Rettungsdienst, befinden. Eine linke Fahrspur F2 ist unbefahren und führt beispielsweise in dieselbe Fahrtrichtung wie die rechte Fahrspur F1.

Das Fahrzeug 1 fährt im automatisierten, insbesondere hochautomatisierten, Fahrbetrieb mit einem Automatisierungsgrad Level 4, so dass sich kein Fahrzeugnutzer in dem Fahrzeug 1 befindet, welcher in bestimmten Verkehrssituationen regulierend eingreifen kann.

Üblicherweise wird das automatisiert fahrende Fahrzeug 1 bei Erkennen eines Einsatzfahrzeuges 2, welches sich im Einsatz befindet, in den Stillstand überführt, beispielsweise um das Einsatzfahrzeug 2 nicht zu blockieren. Dass sich das Einsatzfahrzeug 2 im Einsatz befindet, wird insbesondere anhand eines, beispielsweise mittels eines Folgetonhornes, ausgegebenen akustischen Sondersignals S erkannt.

Im Fall, dass das Einsatzfahrzeug 2 seinen Einsatzort erreicht hat und die Ausgabe des akustischen Sondersignals S nicht abgestellt wird, wobei dies länderspezifisch geregelt sein kann, verbleibt das fahrerlos automatisiert fahrende Fahrzeug 1 im Stillstand, so dass unter Umständen weitere Verkehrsteilnehmer durch das stehende Fahrzeug 1 blockiert werden.

Im Folgenden wird ein Verfahren zum Anpassen eines Fahrverhaltens eines automatisiert fahrenden Fahrzeuges 1 beschrieben, wobei eine mehrstufige Stillstanderkennung in Bezug auf das Einsatzfahrzeug 2 durchgeführt wird.

Gemäß dem in Figur 1 gezeigten Ausführungsbeispiel steht das Einsatzfahrzeug 2 auf der rechten Fahrspur F1 des Fahrbahnabschnittes F, wobei eine Ausgabe des akustischen Sondersignals S weiterhin erfolgt.

Das akustische Sondersignal S wird mittels einer Anzahl von am und/oder im Fahrzeug 1 angeordneten Mikrofonen 3 als Sensoranordnung erfasst. Die Mikrofone 3 sind beispielsweise an einem Fahrzeugdach 1.1 angeordnet. Dabei können beziehungsweise kann durch Auswertung des akustischen Sondersignals S und/oder anhand erfasster Signale zumindest einer optischen Erfassungseinheit des Fahrzeuges 1 eine Richtung und eine Entfernung des Einsatzfahrzeuges 2 relativ zu dem Fahrzeug 1 ermittelt werden.

Das sich im Einsatz befindende Einsatzfahrzeug 2 wird zumindest anhand des von ihm ausgegebenen akustischen Sondersignals S von dem Fahrzeug 1 erkannt, woraufhin das Fahrzeug 1 in den Stillstand überführt wird.

Im Stillstand des Fahrzeuges 1 wird von diesem, insbesondere anhand des mittels der Mikrofone 3 erfassten akustischen Sondersignals S ermittelt, ob sich das Einsatzfahrzeug 2 ebenfalls im Stillstand befindet. Die Ermittlung, ob sich das Einsatzfahrzeug 2 ebenfalls im Stillstand befindet, wird nur durchgeführt, wenn erfasst wird, dass sich das Einsatzfahrzeug 2 vor dem Fahrzeug 1, also in Fahrtrichtung vor dem Fahrzeug 1 befindet.

Wird ermittelt, dass das Einsatzfahrzeug 2 steht, wird ein Zuverlässigkeitsmaß für eine Zuverlässigkeit, mit welcher der Stillstand des Fahrzeuges 1 erkannt wurde, ermittelt. In Abhängigkeit des Zuverlässigkeitsmaßes wird daraufhin eine Entfernung bestimmt und das Fahrzeug 1 wird dann um diese bestimmte Entfernung nach vorn in Richtung des Einsatzfahrzeuges 2 in eine weitere Stillstandposition bewegt.

In einem ersten beispielhaften Fall steht das Fahrzeug 1 wegen des vor ihm erkannten Einsatzfahrzeuges 2. Dazu werden keine im Fahrbetrieb auftretenden Windgeräusche erfasst. Wenn das akustische Sondersignal S von den Mikrofonen 3 des Fahrzeuges 1 über einen vorgegebenen Zeitraum von beispielsweise 10 Sekunden in Amplitude und Richtung konstant detektiert wird, beträgt das Zuverlässigkeitsmaß in Bezug auf die Stillstanderkennung zum Beispiel 1, wobei das Zuverlässigkeitsmaß von 1 signalisiert, dass der Stillstand des Einsatzfahrzeuges 2 sicher erkannt wurde.

Bei einem Zuverlässigkeitsmaß von 1 wird das Fahrzeug 1 mit einer Fahrgeschwindigkeit von maximal 10 km/h als Schwellwert um die bestimmte Entfernung, beispielsweise um 20 Meter, in Richtung des Einsatzfahrzeuges 2 von einer momentanen Stillstandposition in eine weitere Stillstandposition bewegt. An dieser weiteren Stillstandposition wird mittels des Fahrzeuges 1 eine erneute Stillstanderkennung in Bezug auf das Einsatzfahrzeug 2 durchgeführt und erneut ein Zuverlässigkeitsmaß ermittelt.

In einem zweiten beispielhaften Fall befindet sich das Fahrzeug 1 im Stillstand, wobei keine fahrbedingten Windgeräusche mittels der Mikrofone 3 des Fahrzeuges 1 erfasst werden. Wird ermittelt, dass das von dem Einsatzfahrzeug 2 ausgegebene akustische Sondersignal S über einen vorgegebenen Zeitraum von zum Beispiel 30 Sekunden in Bezug auf Amplitude und Richtung schwankt, wobei eine Integration zeigt, dass keine Bewegung des akustischen Sondersignals S und somit des Einsatzfahrzeuges 2 stattfindet, das heißt im Mittel gleichbleibt, dann beträgt das Zuverlässigkeitsmaß in Bezug auf die Erkennung des Stillstandes des Einsatzfahrzeuges 2 2. Dabei stellt die 2 als Zuverlässigkeitsmaß dar, dass die Erkennung des Stillstandes des Einsatzfahrzeuges 2 mittelmäßig erkannt wurde.

Ein solcher Fall kann insbesondere auftreten, wenn das akustische Sondersignal S beispielsweise aufgrund von Nebengeräuschen durch eine Baustelle und/oder einen Lastkraftwagen und/oder durch Reflexionen des akustischen Sondersignals S an Mauern oder Gebäuden schwankt.

Wird als Zuverlässigkeitsmaß 2 ermittelt, bewegt sich das Fahrzeug 1 mit einer Fahrgeschwindigkeit von maximal 10 km/h von der momentanen Stillstandposition zu einer weiteren Stillstandposition, die sich 10 m entfernt zu der momentanen Stillstandposition befindet. An der weiteren Stillstandposition wird dann erneut eine Stillstanderkennung durchgeführt und daraufhin ein Zuverlässigkeitsmaß ermittelt.

In einem dritten beispielhaften Fall beträgt das in Bezug auf die Stillstanderkennung des Einsatzfahrzeuges 2 ermittelte Zuverlässigkeitsmaß 3, welches besagt, dass die Stillstanderkennung nicht möglich ist, insbesondere wenn der erste Fall und der zweite Fall ausgeschlossen werden können.

In Bezug auf den beispielhaften ersten Fall und den beispielhaften zweiten Fall wird die Stillstanderkennung solange durchgeführt, bis das Fahrzeug 1 einen geeigneten Ort, einen sogenannten Safe Harbour, erreicht hat und dort in eine sichere Stillstandposition überführt werden kann. Beispielsweise handelt es sich bei dem geeigneten Ort um einen Parkplatz oder eine Haltebucht.

Wurde das Fahrzeug 1 an dem geeigneten Ort in die sichere Stillstandposition überführt, wartet das Fahrzeug 1 dort solange, bis das von dem sich im Einsatz befindenden Einsatzfahrzeug 2 ausgegebene akustische Sondersignal S mittels der Mikrofone 3 des Fahrzeuges 1 nicht mehr erfasst wird. Beispielsweise hat das Einsatzfahrzeug 2 die Ausgabe des akustischen Sondersignals S deaktiviert oder seinen Fahrbetrieb aufgenommen, so dass sich das Einsatzfahrzeug 2 nicht mehr im Stillstand befindet und sich von dem Fahrzeug 1 entfernt.

Wird das akustische Sondersignal S von dem Fahrzeug 1 nicht mehr erfasst, nimmt das Fahrzeug 1 seinen automatisierten Fahrbetrieb wieder auf, um seinen Zielort zu erreichen.

## Patentansprüche

1. Verfahren zum Anpassen eines Fahrverhaltens eines im automatisierten Fahrbetrieb fahrenden Fahrzeuges (1) bei einem erkannten, sich im Einsatz befindenden Einsatzfahrzeug (2) in einer Umgebung des Fahrzeuges (1), wobei das Einsatzfahrzeug (2) anhand seines ausgegebenen akustischen Sondersignals (S) erkannt wird,
wobei
das Fahrzeug (1) bei Erkennen des Einsatzfahrzeuges (2) in einen Stillstand gebremst wird,
**dadurch gekennzeichnet, dass**
- anhand einer Auswertung des akustischen Sondersignals (S) des Einsatzfahrzeuges (2) ermittelt wird, ob sich das Einsatzfahrzeug (2) ebenfalls im Stillstand befindet, und
- in Abhängigkeit davon, ob sich das Einsatzfahrzeug (2) im Stillstand befindet, das Fahrzeug (1) von einer momentanen Stillstandposition nach vorn in eine weitere Stillstandposition bewegt wird.

2. Verfahren nach Anspruch 1,
**dadurch gekennzeichnet, dass** wenn sich das Einsatzfahrzeug (2) im Stillstand befindet, ein Zuverlässigkeitsmaß für eine Zuverlässigkeit, mit welcher der Stillstand des Einsatzfahrzeuges (2) erkannt wurde, ermittelt wird.

3. Verfahren nach Anspruch 2,
**dadurch gekennzeichnet, dass** in Abhängigkeit des ermittelten Zuverlässigkeitsmaßes eine Entfernung zwischen dem Fahrzeug (1) und dem Einsatzfahrzeug (2) bestimmt wird und das Fahrzeug (1) um die bestimmte Entfernung von seiner momentanen Stillstandposition nach vorn in die weitere Stillstandposition bewegt wird.

4. Verfahren nach Anspruch 3,
**dadurch gekennzeichnet, dass** an der weiteren Stillstandposition des Fahrzeuges (1) erneut ermittelt wird, ob sich das Einsatzfahrzeug (2) im Stillstand befindet und ein Zuverlässigkeitsmaß für die Zuverlässigkeit, mit welcher der Stillstand des Einsatzfahrzeuges (2) erkannt wurde, ermittelt wird, wobei dieser Vorgang so oft wiederholt wird, bis das Fahrzeug (1) eine sichere Stillstandposition erreicht hat.

5. Verfahren nach Anspruch 4,
**dadurch gekennzeichnet, dass** das Fahrzeug (1) von der jeweiligen Stillstandposition bis zum Erreichen der sicheren Stillstandposition mit einer Fahrgeschwindigkeit fährt, welche einen vorgegebenen Schwellwert unterschreitet.

6. Verfahren nach einem der vorhergehenden Ansprüche,
**dadurch gekennzeichnet, dass** nur ermittelt wird, ob sich das Einsatzfahrzeug (2) im Stillstand befindet, wenn ermittelt wird, dass sich das Einsatzfahrzeug (2) vor dem Fahrzeug (1) befindet.

7. Verfahren nach einem der vorhergehenden Ansprüche,
**dadurch gekennzeichnet, dass** der automatisierte Fahrbetrieb des Fahrzeuges (1) erneut aufgenommen wird, wenn das mittels des Einsatzfahrzeuges (2) ausgegebene akustische Sondersignal (S) von einer Sensoranordnung des Fahrzeuges (1) nicht mehr erfasst wird.

8. Verfahren nach einem der vorhergehenden Ansprüche,
**dadurch gekennzeichnet, dass** das Fahrzeug (1) im automatisierten Fahrbetrieb fahrerlos betrieben wird.

9. Verfahren nach Anspruch 7 oder 8,
**dadurch gekennzeichnet, dass** das von dem Einsatzfahrzeug (2) ausgegebene akustische Sondersignal (S) mittels einer am Fahrzeug (1) angeordneten Anzahl von Mikrofonen (3) als Sensoranordnung erfasst wird.

## Claims

1. Method for adapting the driving behavior of a vehicle (1) operating in an automated driving mode when an emergency vehicle (2) currently in use is detected in the vicinity of the vehicle (1), the emergency vehicle (2) being detected on the basis of its emitted special acoustic signal (S),
the vehicle (1) becoming stationary upon detection of the emergency vehicle (2),
**characterized in that**
- by evaluating the special acoustic signal (S) of the emergency vehicle (2), it is determined whether the emergency vehicle (2) is also stationary, and
- depending on whether the emergency vehicle (2) is stationary, the vehicle (1) is moved forward from a momentary stationary position to another stationary position.

2. Method according to claim 1,
**characterized in that** when the emergency vehicle (2) is stationary, a reliability measure is determined for the reliability at which the stationary state of the emergency vehicle (2) was detected.

3. Method according to claim 2,
**characterized in that** depending on the determined reliability measure, a distance between the vehicle (1) and the emergency vehicle (2) is established, and the vehicle (1) is moved forward by the established distance from its current stationary position to the other stationary position.

4. Method according to claim 3,
**characterized in that** at the other stationary position of the vehicle (1), it is again determined whether the emergency vehicle (2) is stationary and a reliability measure for the reliability at which the stationary position of the emergency vehicle (2) was detected is determined, this process being repeated until the vehicle (1) has reached a safe stationary position.

5. Method according to claim 4,
**characterized in that** the vehicle (1) travels from each stationary position until the safe stationary position is reached at a speed which is below a specified threshold.

6. Method according to any of the preceding claims,
**characterized in that** it is only determined whether the emergency vehicle (2) is stationary if it is determined that the emergency vehicle (2) is in front of the vehicle (1).

7. Method according to any of the preceding claims,
**characterized in that** the automated driving mode of the vehicle (1) is resumed when the special acoustic signal (S) emitted by means of the emergency vehicle (2) is no longer registered by a sensor arrangement of the vehicle (1).

8. Method according to any of the preceding claims,
**characterized in that** the vehicle (1) is operated driverlessly in the automated driving mode.

9. Method according to claim 7 or 8,
**characterized in that** the special acoustic signal (S) emitted by the emergency vehicle (2) is registered by means of a number of microphones (3) arranged on the vehicle (1) as a sensor arrangement.

## Revendications

1. Procédé permettant d'adapter un comportement de conduite d'un véhicule (1) circulant en mode de conduite automatisé, lorsqu'un véhicule d'intervention (2) en service est reconnu dans un environnement du véhicule (1), dans lequel le véhicule d'intervention (2) est reconnu à l'aide de son signal spécial sonore (S) émis,
dans lequel
le véhicule (1), lors d'une reconnaissance du véhicule d'intervention (2), est freiné jusqu'à l'arrêt,
**caractérisé en ce que**
- à l'aide d'une évaluation du signal spécial sonore (S) du véhicule d'intervention (2) on détermine si le véhicule d'intervention (2) est lui aussi à l'arrêt, et
- selon que le véhicule d'intervention (2) est à l'arrêt, le véhicule (1) est déplacé vers l'avant depuis une position d'arrêt momentanée vers une position d'arrêt avancée.

2. Procédé selon la revendication 1,
**caractérisé en ce que,** lorsque le véhicule d'intervention (2) est à l'arrêt, une mesure de fiabilité est déterminée pour une fiabilité avec laquelle l'arrêt du véhicule d'intervention (2) a été reconnu.

3. Procédé selon la revendication 2,
**caractérisé en ce qu'**une distance entre le véhicule (1) et le véhicule d'intervention (2) est définie en fonction de la mesure de fiabilité déterminée, et le véhicule (1) est déplacé vers l'avant, de la distance définie, depuis sa position d'arrêt momentanée vers la position d'arrêt avancée.

4. Procédé selon la revendication 3,
**caractérisé en ce que,** à la position d'arrêt avancée du véhicule (1), on détermine à nouveau si le véhicule d'intervention (2) est à l'arrêt et une mesure de fiabilité est déterminée pour la fiabilité avec laquelle l'arrêt du véhicule d'intervention (2) a été reconnu, dans lequel ledit processus est répété jusqu'à ce que le véhicule (1) ait atteint une position d'arrêt sécuritaire.

5. Procédé selon la revendication 4,
**caractérisé en ce que** le véhicule (1) roule, depuis la position d'arrêt respective jusqu'à atteindre la position d'arrêt sécuritaire, à une vitesse de conduite inférieure à une valeur seuil prédéfinie.

6. Procédé selon l'une des revendications précédentes,
**caractérisé en ce qu'**on détermine uniquement si le véhicule d'intervention (2) est à l'arrêt lorsqu'on détermine que le véhicule d'intervention (2) est devant le véhicule (1).

7. Procédé selon l'une des revendications précédentes,
**caractérisé en ce que** le mode de conduite automatisé du véhicule (1) est réactivé lorsque le signal spécial sonore (S) émis au moyen du véhicule d'intervention (2) n'est plus détecté par un agencement de capteurs du véhicule (1).

8. Procédé selon l'une des revendications précédentes,
**caractérisé en ce que** le véhicule (1) fonctionne sans conducteur en mode de conduite automatisé.

9. Procédé selon la revendication 7 ou 8,
**caractérisé en ce que** le signal spécial sonore (S) émis par le véhicule d'intervention (2) est détecté au moyen d'un certain nombre de microphones (3) disposés sur le véhicule (1) en tant qu'agencement de capteurs.
